# EUROPÄISCHE PATENTSCHRIFT

(11) **EP 1 829 801 B1**
(45) Veröffentlichungstag und Bekanntmachung des Hinweises auf die Patenterteilung: **17.06.2009**
(21) Anmeldenummer: 07004129.8
(22) Anmeldetag: 28.02.2007
(51) Int. Cl.: B65G 7/04, B60B 33/00, B62B 5/00

(54) **Vorrichtung zum Bewegen von Ladegutträgern**
Device for moving cargo carriers
Dispositif destiné à déplacer des supports de matériaux de chargement

(30) Priorität: 02.03.2006 DE 102006009662
(43) Veröffentlichungstag der Anmeldung: 05.09.2007
(73) Patentinhaber: ZARGES GmbH, 82362 Weilheim (DE)
(72) Erfinder: Üblacker, Rainer, 82362 Weilheim (DE); Fernandez, Manuel, 82380 Peissenberg (DE)
(74) Vertreter: Baronetzky, Klaus

(56) Entgegenhaltungen:
- DE-U1- 29 507 951
- US-A- 499 783
- US-A- 2 049 344
- US-A- 3 463 505

## Beschreibung

Die Erfindung betrifft eine Vorrichtung zum Bewegen von Ladegutträgern mit einer eine Ladefläche aufweisenden Bodenplatte mit einer freien Unterseite, von der im wesentlichen rechtwinklig ein Flansch absteht.

Als Ladegutträger sind Paletten, Kisten, Behälter, einschließlich Faltbehälter, insbesondere aus Aluminium, aber auch Fässer und Tonnen bekannt. Diese haben im allgemeinen eine Bodenplatte mit einer freien Unterseite mit umlaufendem Flansch, der im wesentlichen rechtwinklig zur Unterseite über diese nach unten hinausragt. Der Flansch ist im allgemeinen ein Vollprofil, das die Bodenplatte vollständig umschließt.

Transportbehälter und Paletten mit Bockrollen, Lenkrollen oder Kufen sind bekannt.

An der Unterseite von Behältern sind auch bleibend befestigte, schwenkbare Vorrichtungen bekannt, die Räder oder Rollen aufweisen. Bei Nichtgebrauch oder zum Stapeln können diese Vorrichtungen derart eingeklappt werden, dass sie flach an der Bodenplatte anliegen. In dieser Position müssen sie zusätzlich fixiert werden.

Es ist auch bekannt, an der Unterseite von Behältern derart schwenkbare Vorrichtungen bleibend zu lagern, dass der Behälter alternativ auf Kufen oder Rollen bewegt werden kann.

Beide Ausführungsformen erfordern für jeden Behälter einen erheblichen konstruktiven Aufwand mit einer entsprechenden Gewichtserhöhung und schließen die Möglichkeit eines raumsparenden Stapelns aus. Damit ist der Raumbedarf für die Lagerung zahlreicher derartiger Behälter ungewöhnlich groß, und zwar nicht nur in Hallen, sondern insbesondere auch in Laderäumen von Lastkraftwagen, Eisenbahnwaggons oder Schiffscontainern.

Die US 2,049,344 beschreibt eine drehbar gelagerte Rolle, die mittels einer Klemmvorrichtung an einem um den Boden eines Eimers oder eines ähnlichen Behälters umlaufenden Wulst bzw. eine Sicke durch Formschluss und Haftreibung fixierbar sein soll. Jedoch kann es, vor allem wenn die Spannkraft oder Elastizität des Klemmelementes durch andauernde dynamische Belastungen nachlässt, zu einem mangelnden Halt der beschriebenen Rolle an dem Behälter führen, was die Zuverlässigkeit der Befestigung der Rolle stark beeinträchtigt.

Aufgabe der vorliegenden Erfindung ist deshalb die Schaffung einer Vorrichtung, die schnell, einfach, sicher und zu jeder Zeit bei entsprechendem Bedarf sowie ohne zu Hilfenahme von Werkzeugen an einem Ladegutträger befestigt werden kann, ohne dessen Stapelfähigkeit zu beeinträchtigen.

Zur Lösung dieser Aufgabe wird bei der eingangs näher erläuterten Vorrichtung erfindungsgemäß vorgeschlagen, dass die Vorrichtung an der Unterseite der Bodenplatte mit einem Stößel anliegend an dem Flansch fixierbar ist.

Zweckmäßigerweise werden mindestens zwei Vorrichtungen an dem Ladegutträger fixiert.

Die erfindungsgemäße Vorrichtung eignet sich besonders für stapelbare Behälter und Kisten, wie Transportkisten, Werkzeugkisten, Medikamentenkisten und dgl., die raumsparend untergebracht und beispielsweise in Großbehältern transportiert werden können, aber auch Tonnen.

Beim Abladen eines derartigen Behälters mittels Hebezeug können ohne zu Hilfenahme von Werkzeugen an dem beispielsweise an einem Kran hängenden, gefüllten Behälter vier Vorrichtungen angebracht werden, beispielsweise zwei mit Bockrollen und zwei mit Lenkrollen. Der beladene Behälter ist dann in engen Räumen mühelos bewegbar bzw. verfahrbar.

Zur sicheren Anbringung der Vorrichtung an einem Behälter hat diese erfindungsgemäß einen Rahmen, der an mindestens einem freien Rand eine Halterung zum Übergreifen des Flansches aufweist, wobei in dem Rahmen durch einen Spannhebel verstellbar ein Stößel gelagert ist, der in der Fixierstellung der Vorrichtung an der in Richtung der Bodenplatte weisenden Innenseite des Flansches anliegt.

Eine besonders stabile Fixierung der Vorrichtung an dem Behälter ist dadurch erreichbar, dass die Halterung nicht linear ist, also gebogen oder erfindungsgemäß die Vorrichtung zur Anbringung an den Ecken von Behältern ausgebildet ist, indem an zwei benachbarten freien Rändern der Vorrichtung Halterungen vorgesehen sind, die im Bereich einer Ecke der Bodenplatte den an dieser vorgesehenen Flansch übergreifen.

Eine besonders einfache Bedienung der erfindungsgemäßen Vorrichtung ist dadurch erreichbar, dass in dem Rahmen ein Spannhebel um eine Achse schwenkbar gelagert ist und eine Handhabe aufweist, die aus der Vorrichtung herausragt, wobei an dem der Handhabe gegenüber liegenden Ende des Spannhebels ein Nocken zum Verstellen des Stößels vorgesehen ist.

Eine besonders bevorzugte Ausführungsform der Erfindung zeichnet sich dadurch aus, dass der Stößel eine Kulissenführung aufweist, mit der der Nocken derart in Eingriff steht, dass in der entspannten Stellung der Vorrichtung der Nocken mit Spiel in eine Ausnehmung der Kulissenführung greift und in der Fixierstellung des Stößels eine Abflachung der Kulissenführung beaufschlagt. Dadurch wird die Vorrichtung wenig stör- und wartungsanfällig. Sie ist praktisch verschleißfrei und wenige Vorrichtungen reichen für eine beliebige Anzahl von Behältern. Die Bauhöhe der Vorrichtung ist gering, weil der Stößel als Platte ausgebildet ist, die in dem Rahmen gleitend geführt ist.

In der Zeichnung sind Ausführungsbeispiele der Erfindung wiedergegeben, die anhand der nachfolgenden Beschreibung näher erläutert werden. Es zeigen:
- Fig. 1:: die Ecke eines quaderförmigen Behälters mit der Vorrichtung;
- Fig. 2:: eine Draufsicht der Vorrichtung, teilweise im Schnitt, in der Fixierstellung;
- Fig. 3:: ein weiteres Ausführungsbeispiel der Vorrichtung in der Fixierstellung;

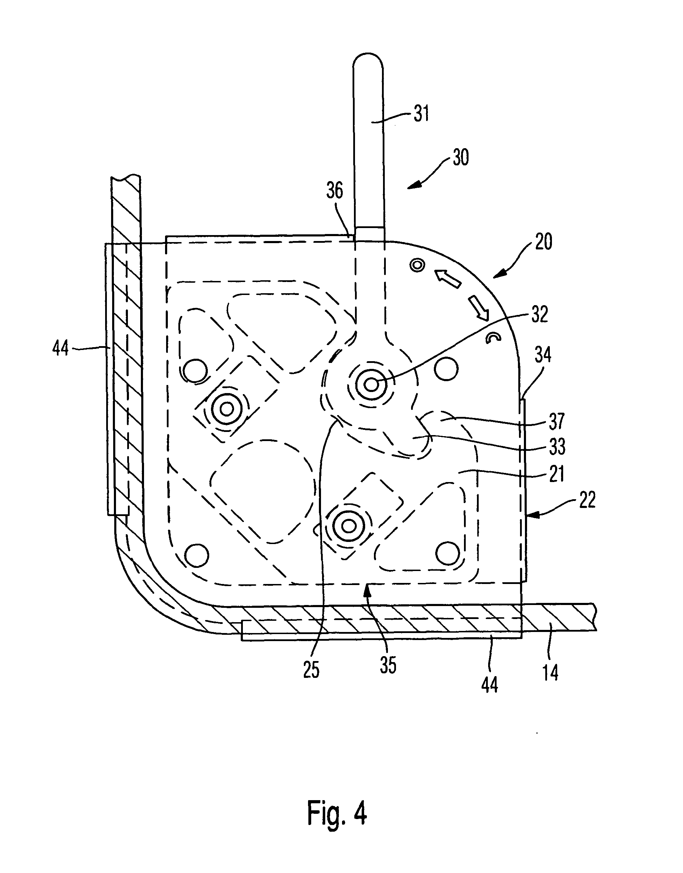

- Fig. 4:: das weitere Ausführungsbeispiel gemäß Fig. 3 in der entspannten Stellung.

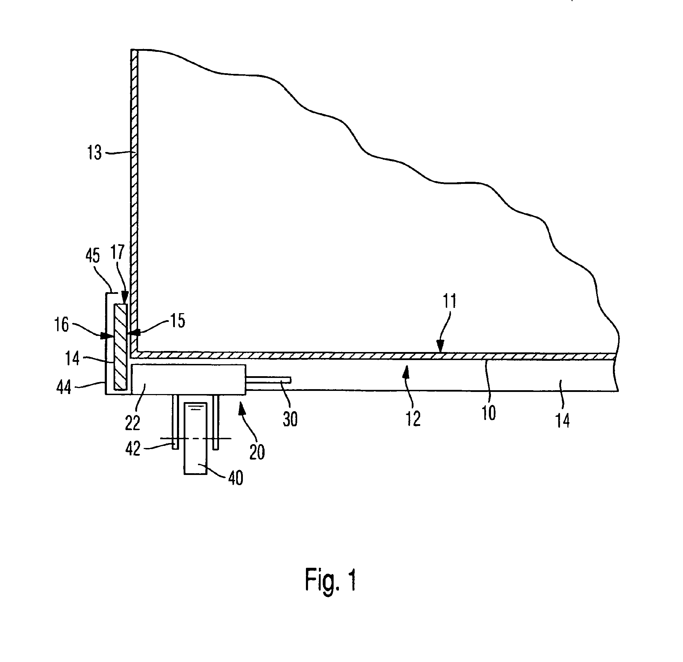

Fig. 1 zeigt schematisch die Ecke eines Behälters mit einer Bodenplatte 10 mit einer Ladefläche 11, auf der das Ladegut als Schüttgut, Einzelpackungen etc. ruht. Der quaderförmige Behälter hat Seitenwände 13 und einen umlaufenden Flansch 14 im Bereich der Bodenplatte 10. Der umlaufende Flansch ist verstärkt und steht im wesentlichen rechtwinklig von der Unterseite 12 der Bodenplatte 10 ab.

Der Flansch 14 hat eine Innenseite 15, die in Richtung der Unterseite 12 weist, eine Außenseite 16 und eine Oberkante 17 im Bereich der Seitenwand 13.

An der Unterseite 12 der Bodenplatte 10 ist bei den dargestellten Ausführungsbeispielen jeweils in den vier Ecken eine Vorrichtung 20 fixierbar.

Die Vorrichtung 20 liegt an der Unterseite 12 der Bodenplatte 10 an und ist an dem Flansch 14 fixierbar.

Auf diese Weise können insgesamt vier Rollen 40 an den Ecken des Behälters angeordnet werden, wobei beispielsweise zwei Rollen als Lenkrollen und zwei Rollen als Bockrollen ausgebildet sind.

Die Vorrichtung 20 hat einen Rahmen 22, der an mindestens einem freien Rand eine Halterung 44 zum Übergreifen des Flansches 14 aufweist.

Bei den in den Figuren dargestellten Ausführungsbeispielen sind unter einem Winkel von 90° versetzt jeweils zwei Halterungen 44 vorgesehen. Jede Halterung 44 kann zur Erleichterung der Montage einen Ansatz 45 an ihrem freien Ende aufweisen, der die Oberkante 17 des Flansches 14 übergreift.

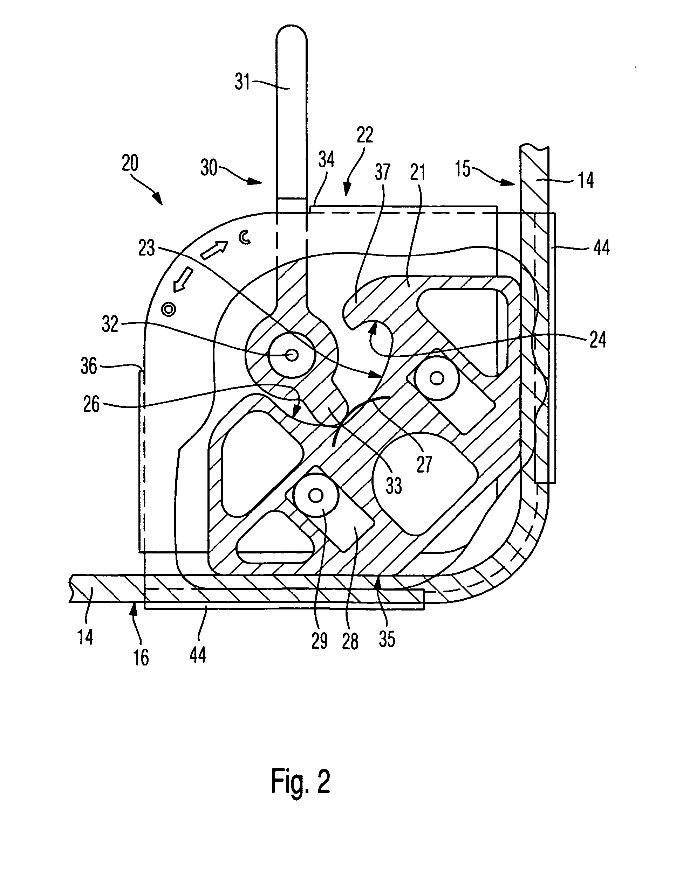

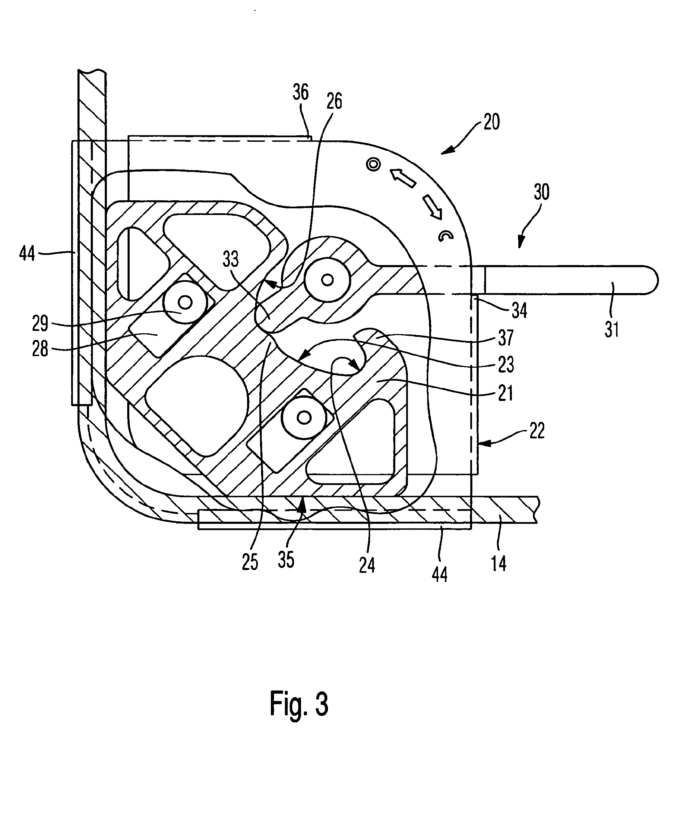

In dem Rahmen 22 ist ein durch einen Spannhebel 30 verstellbarer Stößel 21 gelagert, der in der Fixierstellung der Vorrichtung 20 gemäß Fig. 2 und 3 an der in Richtung der Bodenplatte 10 weisenden Innenseite 15 des Flansches 14 anliegt.

Der Spannhebel 30 ist in dem Rahmen 22 um eine Achse 32 schwenkbar gelagert und weist eine Handhabe 31 auf, die aus der Vorrichtung herausragt und unterhalb der Bodenplatte 10 gut erreichbar und zwischen der Fixierstellung und der entspannten Stellung der Vorrichtung frei verschwenkbar ist.

An dem der Handhabe 31 gegenüberliegenden Ende des Spannhebels 30 ist ein Nocken 33 zum Verstellen des Stößels 21 vorgesehen, wobei der Stößel 21 eine Kulissenführung 23 aufweist, mit der der Nocken 33 derart in Eingriff steht, dass in der entspannten Stellung der Vorrichtung 20 der Nocken 33 mit Spiel in eine Ausnehmung 24 der Kulissenführung 23 greift und in der Fixierstellung des Stößels 21 unter Vorspannung eine Abflachung 26 der Kulissenführung 23 beaufschlagt.

Zur Lagesicherung des Stößels 21 in die Fixierstellung, auch bei Auftreten von Stößen, ist zwischen der Ausnehmung 24 und der Abflachung 26 ein Vorsprung 25 nach Art eines Totpunkts vorgesehen.

Anstelle des Vorsprungs kann gemäß Fig. 2 auch eine Blattfeder 27 vorgesehen sein, über die der Nocken 33 unter Überwindung eines Totpunkts hinwegbewegt wird, wenn er aus der Fixierstellung gemäß Fig. 2 in die entspannte Stellung des Stößels 21 gebracht werden soll, in der der Nocken 33 sich in der Ausnehmung 24 befindet und die freien Ränder 35 des Stößels 21 von den Innenseiten 15 der Flansche 14 abgehoben sind, so dass die Vorrichtung abgenommen werden kann.

Vorzugsweise reicht die Blattfeder 27 in die Abflachung 26 und ist in der Fixierstellung von dem Nocken 33 beaufschlagt. Auf diese Weise steht der Stößel 21 unter einer in Richtung des Flansches 14 weisenden Vorspannung.

Zur Zurückführung des Stößels 21 aus der Fixierstellung in die entspannte bzw. Demontagestellung ist an dem Stößel 21 in Verlängerung der Kulissenführung 23 ein Vorsprung 37 vorgesehen, hinter den der Nocken 33 greift, wenn die Handhabe 31 in Richtung eines Anschlags 36 an dem Rahmen der Vorrichtung 20 verschwenkt wird. Alternativ oder zusätzlich kann der Stößel 21 hierzu durch eine nicht dargestellte Feder beaufschlagt sein.

An dem Rahmen 22 ist zweckmäßigerweise ein Anschlag 34 für den Spannhebel 30 in der Fixierstellung und der Anschlag 36 für den Spannhebel 30 in der entspannten bzw. Demontagestellung vorgesehen.

Gemäß Fig. 2 reicht die Blattfeder 27 in die Abflachung 26 und ist in der Fixierstellung von dem Nocken 33 beaufschlagt.

Der Stößel 21 ist als Platte ausgebildet, die in dem Rahmen 22 gleitend geführt ist. Zur lagesicheren Führung hat die Platte des Stößels 21 zwei Langlöcher 28, die jeweils einen Zapfen 29 im Rahmen 22 übergreifen.

Die Platte des Stößels 21 kann aus Kunststoff bestehen und ist damit leicht federnd, wozu sie auch entsprechende Ausnehmungen aufweisen kann (Fig. 2 und 3).

Besteht die Platte des Stößels 21 aus Metall, weisen die freien Ränder 35 der Platte zweckmäßigerweise Einlagen aus elastisch federndem Material auf, das in der Fixierstellung an der gegenüberliegenden Innenseite 15 des Flansches 14 anliegt.

An dem Rahmen 22 ist ein Lagerbock 42 für eine Rolle 40 vorgesehen. Der Lagerbock kann als Pendelrolle ausgebildet sein.

Anstelle des Lagerbocks für eine Rolle kann dieser auch mit Schlittenkufen versehen sein, wenn es zweckmäßig sein sollte, den Behälter im Gelände mit ungleichmäßiger Bodenbeschaffenheit zu bewegen.

Ebenso ist es möglich, den Lagerbock 42 der Vorrichtung 20 mit einer treppengängigen Rollenanordnung zu versehen.

### Bezugszeichenliste

- 10: Bodenplatte
- 11: Ladefläche
- 12: Unterseite
- 13: Seitenwand
- 14: Flansch
- 15: Flanschinnenseite
- 16: Flanschaußenseite
- 17: Flanschoberkante
- 20: Vorrichtung
- 21: Stößel
- 22: Rahmen
- 23: Kulissenführung
- 24: Ausnehmung
- 25: Vorsprung
- 26: Abflachung
- 27: Blattfeder
- 28: Langloch
- 29: Zapfen
- 30: Spannhebel
- 31: Handhabe
- 32: Achse
- 33: Nocken
- 34: Anschlag
- 35: freier Rand
- 36: Anschlag
- 37: Vorsprung
- 40: Rolle
- 42: Lagerbock
- 44: Halterung
- 45: Ansatz an der Halterung

## Patentansprüche

1. Vorrichtung (20) zum Bewegen von Ladegutträgern mit einer eine Ladefläche aufweisenden Bodenplatte (10) mit einer freien Unterseite (12), von der im Wesentlichen rechtwinklig ein Flansch (14) absteht, und dass die Vorrichtung (20) an der Unterseite (12) der Bodenplatte (10) anliegend an dem Flansch (14) fixierbar ist, **dadurch gekennzeichnet, dass** die Vorrichtung (20) einen Rahmen (22) aufweist, in dem ein Stößel (21) durch einen Spannhebel verstellbar gelagert ist, welcher in der Fixierstellung der Vorrichtung (20) an der in Richtung der Bodenplatte (10) weisenden Innenseite (15) des Flansches (14) anliegt.

2. Vorrichtung nach Anspruch 1, **dadurch gekennzeichnet, dass** der Rahmen (22) an mindestens einem freien Rand eine Halterung (44) zum Übergreifen des Flansches (14) aufweist.

3. Vorrichtung nach einem der vorhergehenden Ansprüche, **dadurch gekennzeichnet, dass** an zwei benachbarten freien Rändern der Vorrichtung (20) Halterungen (44) vorgesehen sind, die im Bereich einer Ecke der Bodenplatte (10) den an dieser vorgesehenen Flansch (14) übergreifen (Fig. 2).

4. Vorrichtung nach mindestens einem der vorhergehenden Ansprüche, **dadurch gekennzeichnet, dass** in dem Rahmen (22) der Spannhebel (30) um eine Achse (32) schwenkbar gelagert ist und eine Handhabe (31) aufweist, die aus der Vorrichtung (20) herausragt, wobei an dem der Handhabe (31) gegenüber liegenden Ende des Spannhebels (30) ein Nocken (33) zum Verstellen des Stößels (21) vorgesehen ist.

5. Vorrichtung nach Anspruch 4, **dadurch gekennzeichnet, dass** der Stößel (21) eine Kulissenführung (23) aufweist, mit der der Nocken (33) derart in Eingriff steht, dass in der entspannten Stellung der Vorrichtung (20) der Nocken mit Spiel in eine Ausnehmung (24) der Kulissenführung (23) greift und in der Fixierstellung des Stößels (21) eine Abflachung (26) der Kulissenführung (23) beaufschlagt.

6. Vorrichtung nach Anspruch 5, **dadurch gekennzeichnet, dass** zwischen der Ausnehmung (24) und der Abflachung (26) ein Vorsprung (25) vorgesehen ist.

7. Vorrichtung nach Anspruch 6, **dadurch gekennzeichnet, dass** der Vorsprung (25) durch eine Blattfeder (27) gebildet ist.

8. Vorrichtung nach Anspruch 7, **dadurch gekennzeichnet, dass** die Blattfeder (27) in die Abflachung (26) reicht und in der Fixierstellung von dem Nocken (33) beaufschlagt ist (Fig. 2).

9. Vorrichtung nach mindestens einem der vorhergehenden Ansprüche, **dadurch gekennzeichnet, dass** der Stößel (21) als Platte ausgebildet ist, die in dem Rahmen (22) gleitend geführt ist.

10. Vorrichtung nach Anspruch 9, **dadurch gekennzeichnet, dass** die Platte des Stößels (21) zwei Langlöcher (28) aufweist, die Zapfen (29) im Rahmen (22) übergreifen.

11. Vorrichtung nach mindestens einem der vorhergehenden Ansprüche, **dadurch gekennzeichnet, dass** die Platte des Stößels (21) zur Zurückführung des Stößels (21) aus der Fixierstellung in die entspannte bzw. Demontagestellung in Verlängerung der Kulissenführung (23) einen Vorsprung (37) aufweist, hinter den der Nocken (33) greift, wenn die Handhabe (31) in Richtung eines Anschlags (36) an dem Rahmen (22) der Vorrichtung (20) verschwenkt wird.

12. Vorrichtung nach mindestens einem der vorhergehenden Ansprüche, **dadurch gekennzeichnet, dass** die Platte des Stößels (21) aus Kunststoff besteht.

13. Vorrichtung nach mindestens einem der Ansprüche 1 bis 11, **dadurch gekennzeichnet, dass** die Platte des Stößels (21) aus Metall besteht und die freien Ränder (35) der Platte, die in der Fixierstellung an den Innenseiten (15) der Flansche (14) anliegen, Einlagen aus elastisch federndem Material aufweisen.

14. Vorrichtung nach mindestens einem der vorhergehenden Ansprüche, **dadurch gekennzeichnet, dass** an dem Rahmen (22) ein Lagerbock (42) für eine Rolle (40) vorgesehen ist.

## Claims

1. Device (20) for moving cargo carriers with a base plate comprising a loading area (10) with a free lower surface (12), from which a flange (14) stands away essentially at right-angles and the device (20) is fixable onto the lower surface (12) of the base plate (10) resting on the flange (14), **characterised in that** the device (20) comprises a frame (22), in which a tappet (21) is lodged adjustably by a clamping lever, which in the fixing position of the device (20) lies against inner side (15) of the flange (14) pointing toward the base plate (10).

2. Device according to claim 1, **characterized by** the fact that the frame (22) comprises a mounting plate (44) for gripping the flange (14) on at least one free edge.

3. Device according to one of the preceding claims **characterized in that** mounting plates (44) are provided on two adjacent free edges of the device (20), which grip the flange (14) provided on a corner of the base plate (10) (Fig 2).

4. Device according to at least one of the preceding claims, **characterized in that** within the frame (22) the clamping lever (30) is mounted tilting around an axis (32) and comprises a handle (31), which stands out from the device (20), where a cam (33) for adjusting the tappet (21) is provided on the opposite end of the clamping lever (30) from the handle (31).

5. Device according to claim 4, **characterized in that** the tappet (21) comprises a sliding block guide (23), with which the cam (33) engages so that with the device (20) in the relaxed position the cam grips into a recess (24) of the sliding block guide (23) with play and in the fixing position of the tappet (21) lies against a flattening (26) of the sliding block guide (23).

6. Device according to claim 5, **characterized in that** a protuberance (25) is provided between the recess (24) and the flattening (26).

7. Device according to claim 6, **characterized in that** the protuberance (25) is formed by a leaf spring (27).

8. Device according to claim 7, **characterized in that** the leaf spring (27) reaches into the flattening (26) and is impinged on in the fixing position by the cam (33) (Fig. 2).

9. Device according to at least one of the preceding claims, **characterized in that** the tappet (21) is configured as a plate, which is slide-guided into the frame (22).

10. Device according to claim 9, **characterized in that** the tappet plate (21) comprises two long holes (28), which grip the trunnion (29) in the frame (22).

11. Device for at least one of the preceding requirements, **characterized in that** the tappet plate (21) for guiding the tappet (21) back from the fixing position into the relaxed or disassembly position in extension of the sliding block guide (23) comprises a protuberance (37), behind which the cam (33) grips, if the handle is pivoted (31) towards an end stop (36) on the frame (22) of the device (20).

12. Device according to at least one of the preceding claims, **characterized in that** the tappet plate (21) is made of plastic.

13. Device according to at least one claims 1 to 11, **characterized in that** the tappet plate (21) is made of metal and the free edges (35) of the plate, which rest in the fixing position against the inner sides (15) of the flanges (14), comprise inserts of elastic springy material.

14. Device according to at least one of the preceding claims, **characterized in that** (22) a bearing bracket (42) is provided on the frame for a roller (40).

## Revendications

1. Dispositif (20) pour déplacer des porteurs de cargaisons ayant une plaque de base (10), qui présente une surface de chargement avec une face inférieure libre (12), depuis laquelle se tient essentiellement perpendiculairement éloignée une bride (14), et le dispositif (20) est fixable sur la face inférieure (12) de la plaque de base (10) collant la bride (14), **caractérisé en ce que** le dispositif (20) présente un cadre (22), dans lequel est logé un coulisseau (21) réglable par un levier de tension, qui colle la face interne (15) de la bride (14) dirigée vers la plaque de base (10) dans la position fixée du dispositif (20).

2. Dispositif selon la revendication 1, **caractérisée en ce que** sur au moins un bord libre le cadre (22) présente un point d'attache (44) pour saisir la bride (14).

3. Dispositif selon l'une des revendications précédentes **caractérisé en ce que** des points d'attache (44), qui saisissent la bride (14) dans la zone d'un coin de la plaque de base (10) sont prévus sur deux bords contiguës libres du dispositif (20) (fig 2).

4. Dispositif selon au moins une des revendications précédentes, **caractérisé en ce qu'**un levier de tension (30) est monté dans le cadre (22) pivotable autour d'un axe (32) et présente une poignée (31), qui dépasse du dispositif (20), où une saillie (33) pour ajuster le coulisseau (21) est fournie sur l'extrémité du levier de tension (30) en face de la poignée (31).

5. Dispositif selon la revendication 4, **caractérisée en ce que** le coulisseau (21) présente un guide de coulisseau (23), avec lequel la saillie (33) s'engage de sorte qu'avec le dispositif (20) en position de relâche, la saillie s'engage avec jeu dans une cavité (24) du guide de coulisseau (23) et dans la position de fixation du coulisseau (21) bute sur un aplatissement (26) du guide de coulisseau (23).

6. Dispositif selon la revendication 5, **caractérisée en ce qu'**une protubérance (25) est prévue entre la cavité (24) et l'aplatissement (26).

7. Dispositif selon la revendication 6, **caractérisée en ce que** la protubérance (25) est formée par un ressort à lames (27).

8. Dispositif selon la revendication 7, **caractérisée en ce que** le ressort à lames (27) s'étend dans l'aplatissement (26) et est admis en position de fixation par la saillie (33) (fig. 2).

9. Dispositif selon au moins une des revendications précédentes, **caractérisé en ce que** le coulisseau (21) est configuré comme plaque, qui est guidé glissant dans le cadre (22).

10. Dispositif selon la revendication 9, **caractérisée en ce que** la plaque du coulisseau (21) présente deux longs trous (28), qui saisissent les tourillons (29) dans le cadre (22).

11. Dispositif selon au moins une des revendications précédentes, **caractérisé en ce que** la plaque du coulisseau (21) présente une protubérance (37) dans l'extension du guide de coulisseau (23) pour reculer le coulisseau (21) de la position de fixation vers la position détendue ou de démontage, derrière laquelle le tourillon (33) s'agrippe, si la poignée est pivotée (31) vers une butée (36) sur le cadre (22) du dispositif (20).

12. Dispositif selon au moins une des revendications précédentes, **caractérisé en ce que** la plaque du coulisseau (21) est composée de matière plastique.

13. Dispositif selon au moins une des revendications 1 à 11, **caractérisé en ce que** la plaque du coulisseau (21) est composée de métal et les bords libres (35) de la plaque, qui se repose en position de fixation contre les faces internes (15) des brides (14), présentent des insertions en matériel élastique souple.

14. Dispositif selon au moins une des revendications précédentes, **caractérisé en ce que** (22) un palier (42) pour un rouleau (40) est prévu sur le cadre.
